# FASCICULE DE BREVET EUROPEEN

(11) **EP 2 331 404 B1**
(45) Date de publication et mention de la délivrance du brevet: **21.03.2012**
(21) Numéro de dépôt: 09811161.0
(22) Date de dépôt: 08.07.2009
(51) Int. Cl.: B64D 29/06, F16B 5/02

(54) **DISPOSITIF DE CENTRAGE D'UNE STRUCTURE D'ENTREE D'AIR SUR UNE STRUCTURE MEDIANE D'UNE NACELLE**
VORRICHTUNG ZUR ZENTRIERUNG EINER LUFTEINLASSSTRUKTUR AUF DER ZENTRALSTRUKTUR EINER GONDEL
DEVICE FOR CENTERING AN AIR INLET STRUCTURE ON A CENTRAL STRUCTURE OF A NACELLE

(30) Priorité: 02.09.2008 FR 0804800
(43) Date de publication de la demande: 15.06.2011
(73) Titulaire: Aircelle, 76700 Gonfreville l'Orcher (FR)
(72) Inventeur: VAUCHEL, Guy Bernard, F-76600 Le Havre (FR)
(74) Mandataire: Gaillarde, Frédéric F. Ch.
(86) Numéro de dépôt international: PCT/FR2009/000844
(87) Numéro de publication internationale: WO 2010/026302

(56) Documents cités:
- FR-A- 2 616 474
- FR-A- 2 757 823
- FR-A- 2 781 849
- FR-A- 2 906 568
- GB-A- 2 274 490
- US-A- 5 746 558

## Description

L'invention concerne un dispositif de centrage d'une structure d'entrée d'air sur une structure médiane d'une nacelle.

L'invention concerne également une nacelle comprenant un tel dispositif de centrage.

D'une façon générale, une nacelle d'aéronef présente une structure comprenant une structure d'entrée d'air, une structure médiane et une section aval. On entend ici par le terme « aval » la direction correspondant au sens du flux d'air froid pénétrant dans le turboréacteur. Le terme « amont » désigne la direction opposée.

La nacelle présente une tuyère aval d'éjection dont la sortie est située en aval du turboréacteur. Plus en amont, la section aval abrite en général des moyens d'inversion de poussée destinés à entourer la chambre de combustion du turboréacteur. La structure médiane est disposée en aval de la structure d'entrée d'air de sorte à entourer la soufflante du turboréacteur. La structure d'entrée d'air est située en amont du turboréacteur servant à propulser l'aéronef.

La structure d'entrée d'air comprend, d'une part, une lèvre d'entrée d'air et d'autre part, une structure aval sur laquelle est rapportée la lèvre. La lèvre d'entrée d'air est adaptée pour permettre la captation optimale vers le turboréacteur de l'air nécessaire à l'alimentation de la soufflante et des compresseurs internes du turboréacteur. La structure aval, quant à elle, est destinée à canaliser convenablement l'air vers les aubes de la soufflante. Cette structure aval comporte généralement un panneau externe et un panneau interne. Le panneau interne comporte une virole acoustique permettant d'atténuer les bruits engendrés par le turboréacteur ainsi que les vibrations des structures. La structure aval ainsi que la lèvre d'entrée d'air sont rattachées en amont d'un carter de la soufflante appartenant à la structure médiane de la nacelle.

Selon les conditions de température et d'humidité relative au sol ou en vol, du givre peut se déposer sur le profil de la lèvre, notamment au niveau du profil intérieur. Cette formation de givre peut être dangereuse pour le fonctionnement mécanique des parties fixes et tournantes du turboréacteur et occasionner une diminution des performances. Des systèmes de dégivrage de cette partie de la lèvre d'entrée d'air ont donc été mis au point pour remédier à ce problème.

Actuellement, les opérations de maintenance sur ces équipements logés à l'intérieur de la structure d'entrée d'air obligent les constructeurs à prévoir des trappes d'accès à ces différents équipements. Cependant ces trappes ne sont pas toujours suffisantes. Il est ainsi parfois nécessaire de vérifier les équipements internes de la structure d'entrée d'air à l'aide d'outils spécifiques, tels qu'un endoscope. De tels outils spécifiques ne permettent pas toujours un contrôle satisfaisant.

Par ailleurs, pour remplacer une partie des équipements internes, il est en général nécessaire de déposer la totalité de la structure d'entrée d'air. Une telle dépose requiert un outillage important et entraîne une immobilisation de l'ensemble propulsif et donc généralement de l'avion.

Il a été proposé une structure d'entrée d'air formée par un panneau externe fixé à la lèvre d'entrée d'air et au moins un panneau interne fixé au carter d'une structure médiane. La structure d'entrée d'air est mobile en translation par rapport à la structure médiane au moyen d'un système de rails fixés sur la virole acoustique. En fin de maintenance pour refermer la structure d'entrée d'air sur la structure médiane, il est connu de la demande FR 06-08599 (numéro de publication FR 2 906 568) d'employer un dispositif de centrage sous la forme d'un pion de centrage afin de guider selon un axe la fermeture de la lèvre d'entrée d'air sur la virole acoustique.

Cependant, le recouvrement de la lèvre d'entrée d'air et de la virole acoustique ainsi que l'alignement du pion de centrage par rapport à l'alésage récepteur doivent être très précis pour éviter tout frottement et tout coincement pouvant empêcher la fermeture de la lèvre d'entrée d'air sur la virole acoustique.

Il est également connu des demandes FR 08-00265 et FR 08-00560 d'employer des moyens de verrouillage supplémentaires disposés respectivement à l'arrière ou à l'avant du dispositif de centrage.

Cependant, l'association du dispositif de centrage et des moyens de verrouillage nécessite des géométries de pièces très précises pour limiter le jeu entre la lèvre d'entrée d'air et la virole acoustique afin d'assurer un bon centrage et également une bonne reprise d'effort mécanique. Une telle configuration engendre un coût de réalisation relativement élevé.

Un but de la présente invention est donc de fournir un dispositif de centrage efficace, simple à mettre en oeuvre et permettant d'éviter tout risque de coincement, dans le cas particulier susmentionné d'une structure d'entrée d'air mobile par rapport à une structure médiane de nacelle, mais aussi dans le cas plus général de toute structure mobile par rapport à une structure fixe de nacelle.

A cet effet, selon un premier aspect, l'invention a pour objet un dispositif de centrage d'une structure mobile sur une structure fixe d'une nacelle comportant :
- un pion de centrage monté sur un support de pion destiné à être fixé respectivement sur la structure mobile ou sur la structure fixe, le pion de centrage présentant un axe central, et
- un alésage récepteur monté sur un support d'alésage destiné à être fixé respectivement sur la structure fixe ou sur la structure mobile, ledit alésage récepteur étant apte à recevoir au moins le pion de centrage,
remarquable en ce que le dispositif de centrage comporte en outre un système d'interface mobile apte à superposer l'axe central du pion de centrage et l'axe central dudit système d'interface ou de l'alésage récepteur et à recevoir ledit pion de centrage dans un orifice central, ainsi que des moyens de verrouillage aptes à bloquer ledit système d'interface.

Le dispositif de l'invention permet de manière avantageuse de limiter tout coincement dans la mesure où ledit dispositif est capable d'assurer la fermeture même s'il existe un désalignement entre le pion de centrage et l'alésage récepteur.

Le dispositif de l'invention présente l'avantage d'être simple à mettre en oeuvre car il autorise une tolérance de fabrication plus importante que dans l'art antérieur. En effet, il n'est plus nécessaire d'usiner les pièces de manière très précise comme dans l'art antérieur pour que ces dernières coopèrent parfaitement entre elles. Ainsi, de manière avantageuse, le coût et le temps de fabrication sont diminués.

Selon d'autres caractéristiques de l'invention, la structure selon l'invention comporte l'une ou plusieurs des caractéristiques optionnelles suivantes considérées seules ou selon toutes les combinaisons possibles:
- l'axe central du système d'interface et l'axe central du pion de centrage sont sensiblement parallèles et non confondus ;
- le système d'interface est un disque dont l'orifice central est de diamètre sensiblement égal à celui du pion de centrage ce qui permet de maintenir le pion de centrage dans le système d'interface ;
- le disque comporte une partie périphérique entourant une partie centrale, ladite partie périphérique pouvant être plus mince que la partie centrale ;
- le système d'interface est monté mobile en translation dans l'alésage récepteur selon un axe sensiblement perpendiculaire à l'axe central dudit système;
- les moyens de verrouillage comportent des patins de verrouillage aptes à bloquer la partie périphérique ce qui permet d'assurer un bon blocage du système d'interface;
- les patins de verrouillage sont activés électriquement ce qui permet de maintenir le pion de centrage dans l'alésage récepteur à distance et sur commande;
- le système d'interface comporte une rotule montée dans l'orifice central du disque ce qui permet d'absorber tout désalignement entre les pièces;
- le pion est monté sur une rotule fixée dans le support de pion ;
- le système d'interface est monté sur le support de pion mobile en translation suivant un axe sensiblement perpendiculaire à l'axe central dudit pion ce qui permet de garder l'alésage récepteur fixe par rapport au pion de centrage;
- le système d'interface comporte une multitude de plots de verrouillage montés mobiles dans le support d'alésage ce qui permet de déterminer le diamètre de l'orifice central et également d'assurer le bon verrouillage du pion de centrage une fois inséré ;
- le pion de centrage présente une première section et une deuxième section entourant un décrochement de diamètre inférieur à ceux de la première section et de la deuxième section ce qui permet d'associer à la fonction de centrage du dispositif de l'invention à une fonction de blocage dans la manoeuvre d'engagement des éléments les uns dans les autres,
- ladite structure mobile est une structure d'entrée d'air et ladite structure fixe est une structure médiane de nacelle.

Selon un autre aspect, l'invention a pour objet une nacelle pour turbomoteur comprenant une structure d'entrée d'air et une structure médiane, caractérisé en ce que la nacelle comporte un dispositif de centrage de la structure d'entrée d'air sur la structure médiane selon l'invention.

L'invention sera davantage comprise à la lecture de la description non limitative qui va suivre, faite en référence aux figures ci-annexées.
- La figure 1 est une vue en perspective d'une nacelle de l'invention entourant un turboréacteur ;
- La figure 2 est une coupe schématique longitudinale de la zone d'interface d'une structure d'entrée d'air et d'une structure médiane de la nacelle de l'invention ;
- Les figures 3a et 3b sont un agrandissement de la zone Il représentant un mode de réalisation du dispositif de l'invention;
- Les figures 4a et 4b sont une variante du mode de réalisation du dispositif de l'invention des figures 3a et 3b ;
- Les figures 5a et 5b sont une variante du mode de réalisation du dispositif de l'invention des figures 3a et 3b ;
- Les figures 6a et 6b sont une variante du mode de réalisation du dispositif de l'invention des figures 3a et 3b ;
- Les figures 7a à 7d sont une variante du mode de réalisation du dispositif de l'invention des figures 3a et 3b, les figures 7c et 7d étant des coupes axiales du dispositif de l'invention ;
- La figure 8 est une variante du mode de réalisation du dispositif de l'invention des figures 3a et 3b.

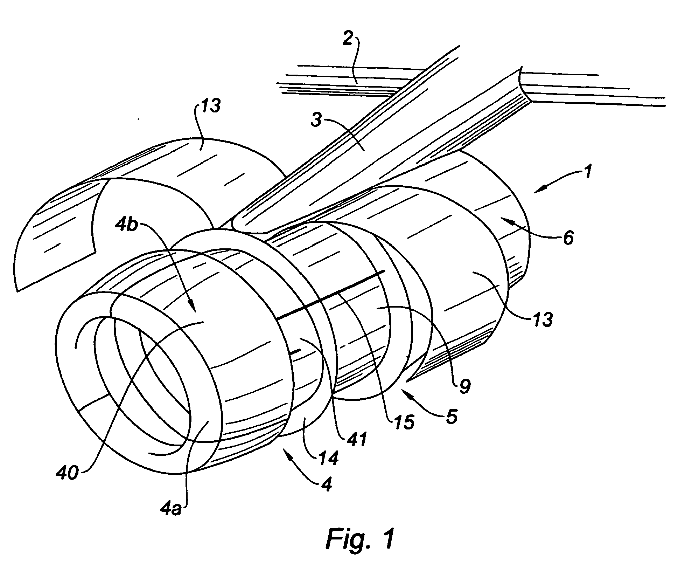

Une nacelle 1 selon l'invention telle que représentée sur la figure 1 constitue un logement tubulaire pour un turboréacteur (non visible) dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle 1 est destinée à être rattachée à une structure fixe d'un avion, telle qu'une aile 2, par l'intermédiaire d'un pylône 3. Plus précisément, la nacelle 1 présente une structure d'entrée d'air 4, une structure médiane 5 entourant une soufflante (non visible) du turboréacteur, et une structure arrière 6 entourant le turboréacteur et abritant généralement un système d'inversion de poussée (non représenté).

La présente invention sera décrite dans ce qui suit dans le cas particulier où elle est appliquée au centrage de la structure d'entrée d'air 4 par rapport à la structure médiane 5, mais cela n'est nullement limitatif.

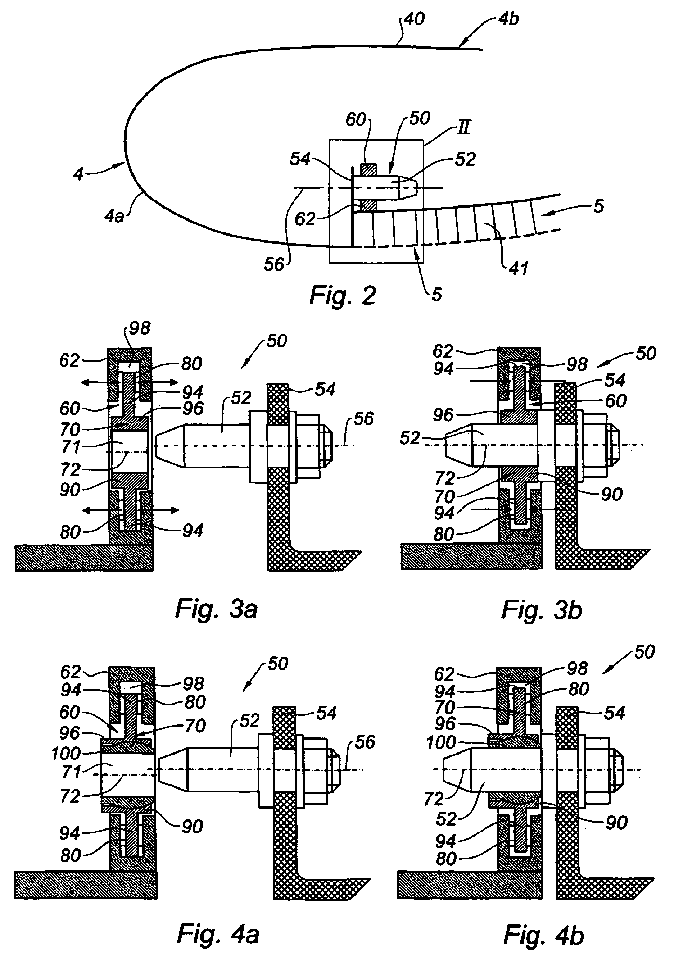

La structure d'entrée d'air 4 se divise en deux zones. La première zone correspond à une lèvre 4a d'entrée adaptée pour permettre la captation optimale vers le turboréacteur de l'air nécessaire à l'alimentation de la soufflante et des compresseurs internes du turboréacteur. La seconde zone correspond à une structure aval 4b comprenant un panneau externe 40 et un panneau interne 41 (voir figures 1 et 2). Sur le panneau interne 41 est rapportée la lèvre 4a et destinée à canaliser convenablement l'air vers les aubes 8 de la soufflante 6.

Dans le mode de réalisation particulier choisi pour illustrer l'invention, la lèvre 4a est intégrée au panneau externe 40 de manière à former une pièce unique démontable, le panneau interne 41 étant rattaché en amont d'un carter 9 de la soufflante appartenant à la structure médiane 5 de la nacelle 1, par exemple, par l'intermédiaire de brides de fixation.

La figure 1 montre la structure d'entrée d'air 4 avec le panneau externe 40 en position d'ouverture partielle. Dans ce mode de réalisation, l'ouverture dudit panneau externe ne peut s'effectuer qu'après ouverture de capots 13 fan latéraux équipant la section médiane. La structure d'entrée d'air 4 peut être modulaire et comprendre une pluralité de panneaux externes 40 définissant chacun une portion de lèvre d'entrée d'air 4a correspondante. Dans ce cas, la structure d'entrée d'air 4 présente des lignes de jonction. Toutefois, ces lignes s'étendant longitudinalement par rapport à la nacelle 1, elles n'ont qu'une incidence négligeable sur la continuité aérodynamique de la structure d'entrée d'air 4.

Le ou les panneaux internes 41 est(sont) destiné(s) à canaliser convenablement l'air vers les aubes (non représentées) de la soufflante. Le ou les panneaux internes 41 est(sont) fixé(s) à leur extrémité aval à une extrémité amont de la structure médiane 5, notamment au niveau du carter 9, par l'intermédiaire de brides de fixation. Ainsi, le ou les panneaux internes 41 forme(nt) avec la structure médiane 5 une structure fixe par rapport à la nacelle 1 de l'invention. Par ailleurs, le ou les panneaux internes 41 comprend(comprennent) une virole acoustique destinée à atténuer les nuisances sonores dues au fonctionnement du turboréacteur et aux vibrations de la structure de la nacelle 1. La virole acoustique peut être constituée d'une structure en nid d'abeille ou de toute autre structure permettant d'atténuer les nuisances sonores.

La nacelle 1 de l'invention peut comprendre également des moyens de guidage (non représenté) du ou des panneaux externes 40 aptes à permettre un déplacement sensiblement rectiligne du ou des panneaux externes 40 vers l'amont de la nacelle 1 de manière à pouvoir ouvrir la structure d'entrée d'air 4 (voir figure 1).

Par ailleurs, la fermeture de la lèvre 4a est également assurée par le dispositif de centrage 50 conforme à l'invention.

Pour ce faire, le dispositif 50 de l'invention comporte :
- un pion de centrage 52 monté sur un support de pion 54 fixé sur la structure d'entrée d'air 4, ledit pion 52 présentant un axe central 56, et
- un alésage récepteur 60 monté sur un support d'alésage 62 fixé sur la structure médiane 5, ledit alésage récepteur 60 étant apte à recevoir au moins le pion de centrage 50.

Il est également possible que le pion de centrage 52 et l'alésage récepteur soient montés respectivement sur la structure médiane 5 et sur la structure d'entrée d'air 4.

Le dispositif 50 de l'invention comporte en outre un système d'interface 70 mobile apte à superposer l'axe central 72 dudit système d'interface 70 et l'axe central 56 du pion de centrage 52 ou l'axe central de l'alésage récepteur et celui 56 du pion de centrage. Ledit système d'interface 70 étant également apte à recevoir ledit pion 52 de centrage dans un orifice central 71. Le dispositif 50 de l'invention comporte en outre des moyens de verrouillage 80 aptes à bloquer ledit système d'interface 70, notamment dans la position où le pion de centrage 52 est inséré dans le système d'interface 70.

Ledit système 70 est alors configuré pour :
- se déplacer afin de superposer sensiblement l'axe central 72 du système d'interface et l'axe central 56 du pion de centrage ou de l'alésage récepteur 60 pour permettre l'insertion du pion de centrage 52 dans l'alésage récepteur 60, et
- être maintenu par les moyens de verrouillage 80 dans la position où le pion de centrage 52 est inséré dans l'alésage récepteur 60 (voir figures 3a et 3b). Typiquement, le diamètre du pion de centrage 52 est défini pour tenir tous les efforts en vol en relation avec la disposition et avec le nombre de dispositifs de centrage utilisés.

L'axe central 72 du système d'interface et l'axe central 56 du pion de centrage sont sensiblement parallèles. Ces derniers 72 et 56 peuvent être confondus ou non. Dans le cas où ces derniers 72 et 56 ne sont pas confondus, le centrage de la lèvre d'entrée d'air 4a sur la structure médiane 5 présente des difficultés, par exemple de pincement.

Le système d'interface 70 est avantageusement mobile lorsque le pion de centrage 52 s'insère dans l'alésage récepteur 60. De préférence, le système d'interface 70 est mobile en translation dans l'alésage récepteur 60 selon un axe sensiblement perpendiculaire à l'axe central 72 du système d'interface.

De ce fait, lorsque le pion de centrage 52 présente un axe central 56 sensiblement non confondu avec l'axe central 72 du système d'interface, le système d'interface 70 se déplace dans l'alésage récepteur 60 de sorte que l'axe central 72 dudit système soit confondu avec l'axe central 56 du pion de centrage. Ainsi, le pion de centrage 52 coopère avec l'alésage récepteur 60 sans qu'il ne soit nécessaire d'usiner de manière précise les éléments permettant le centrage de la lèvre d'entrée d'air 4a sur la structure médiane 5. En outre, de manière avantageuse, le dispositif 50 de l'invention évite tout réglage ou calage à l'installation de la structure d'entrée d'air 4 et de la structure médiane 5. Il n'est pas non plus utile de prévoir lors de maintenances des actions ponctuelles de contrôle et de retouche de réglage du dispositif 50 de l'invention. Il est alors possible de limiter le coût et le temps de fabrication et de maintenance du dispositif 50 de l'invention.

Par ailleurs, la manoeuvre de la structure d'entrée d'air 4 par rapport à la structure médiane 5 s'effectue sans effort mécanique puisque le système d'interface 70 absorbe tout désalignement éventuel du pion de centrage 52. La surface d'interface du pion de centrage 52 et de l'alésage récepteur 60 reste intacte.

Ainsi, aucun effort parasite entre le pion de centrage 52 et l'alésage récepteur 60 n'est répercuté sur la structure médiane 5 et la structure d'entrée d'air 4.

Selon un mode de réalisation non représenté, le dispositif 50 de l'invention est couplé à des dispositifs de centrage connus de l'homme du métier sans système d'interface 70. Lesdits dispositifs connus sont, par exemple de type pion de centrage inséré dans un alésage récepteur.

Les figures 3a et 3b représentent un premier mode de réalisation du dispositif 50 de l'invention. Plus particulièrement, la figure 3a illustre une configuration dans laquelle le pion de centrage 52 n'est pas inséré dans l'alésage récepteur 60. La figure 3b illustre une configuration dans laquelle le pion de centrage 52 est inséré dans l'alésage récepteur 60.

Dans ce mode de réalisation, le système d'interface 70 est monté dans l'alésage récepteur 60 en présentant un jeu réduit aux jeux inhérents à l'usinage du système d'interface 70 et de l'alésage récepteur 60. Le système d'interface 70 est sous la forme d'un disque 90 présentant un orifice central 71 de diamètre sensiblement égal à celui du pion de centrage 52. L'orifice central 71 et le système d'interface peuvent avoir un axe central confondu.

Le jeu étant réduit à son minimum, il permet d'assurer un bon positionnement géométrique du pion de centrage 52 par rapport à l'alésage récepteur 60. Une telle configuration permet d'éviter tout réglage ou calage à l'installation des éléments de la nacelle 1 de l'invention.

Le disque 90 peut présenter une partie périphérique 94 entourant une partie centrale 96, ladite partie périphérique 94 pouvant être plus mince que la partie centrale 96. La partie périphérique 94 peut ainsi venir s'engager dans un orifice 98 de l'alésage récepteur. Le système d'interface 70 est monté dans l'alésage récepteur 60 mobile en translation selon un axe perpendiculaire à l'axe central 72 du système d'interface. Une telle configuration permet au pion de centrage 52 d'absorber tout désalignement de l'axe central 56 du pion de centrage par rapport à l'axe central 72 du système d'interface.

Lorsque le dispositif de verrouillage 80 est désactivé, le déplacement dusystème d'interface 70 est rendu libre dans l'alésage récepteur 60. Le disque 90 vient alors en butée au fond de l'orifice 98. Le jeu de déplacement est avantageusement défini pour que le cône de présentation du pion de centrage 52 soit toujours compris dans l'enveloppe de l'orifice central 71 du système d'interface 70.

Des moyens de verrouillage 80 permettent de bloquer le pion de centrage 52 dans la position dans laquelle ce dernier est venu s'insérer dans l'alésage récepteur 60. Les moyens de verrouillage 80 sont, de préférence, des patins de verrouillages situés dans l'orifice 98 de l'aésage récepteur pour bloquer la partie périphérique 94 du système d'interface périphérique ce qui permet d'assurer un bon blocage du système d'interface 70. Le nombre de patins de verrouillage est déterminé par l'homme du métier en fonction du besoin.

Selon un mode de réalisation, les patins de verrouillage sont activés électriquement, de préférence par un système de blocage à manque de courant, c'est-à-dire par un système qui se trouve en position verrouillée lorsqu'il n'est pas alimenté électriquement, et déverrouillée lorsqu'il est alimenté électriquement. De ce fait, le maintien du pion de centrage 52 dans l'alésage récepteur 60 peut être assuré à distance et sur commande.

La commande du verrouillage peut avantageusement être associée à la commande d'ouverture motorisée de la structure d'entrée d'air 4.

Lors de la manoeuvre d'ouverture ou de fermeture, les moyens de verrouillage 80 sont désactivés de sorte à libérer le système d'interface 70. En fin de fermeture, les patins de verrouillage sont préférentiellement activés en bloquant le pion de centrage 52 dans la position conduite suivant l'axe central de ce dernier.

La dispositif 50 de l'invention peut comporter un système d'alimentation porté par l'élément de la nacelle 1 de l'invention portant l'alésage récepteur 60, notamment pour la commande électrique.

Les figures 4a et 4b représentent un deuxième mode de réalisation du dispositif 50 de l'invention. Plus particulièrement, la figure 4a illustre une configuration dans laquelle le pion de centrage 52 n'est pas inséré dans l'alésage récepteur 60. La figure 4b illustre une configuration dans laquelle le pion de centrage 52 est inséré dans l'alésage récepteur 60.

Selon cette variante, le système d'interface 70 comporte une rotule 100 montée dans l'orifice central 71 de l'alésage récepteur 60, notamment du disque 90. Dans le cas où la rotule 100 est insérée dans le disque 90, la paroi de la partie centrale 96 est amincie de sorte à présenter un orifice central 71 de diamètre sensiblement égale à celui du pion de centrage 52.

Ainsi, tout désalignement relatif entre les axes central 56 et 72, mais aussi entre les éventuels autres dispositifs de centrage installés en périphérie de la nacelle 1 de l'invention, sont absorbés. De ce fait, ce type d'alignement ne nuit pas au centrage de la structure d'entrée d'air 4 sur la structure médiane 5.

Avantageusement, la rotule 100 est limitée dans son débattement afin d'offrir un bon positionnement relatif par rapport à l'axe central 72 du système d'interface lors de l'insertion du pion de centrage 52 et de l'alésage récepteur 60.

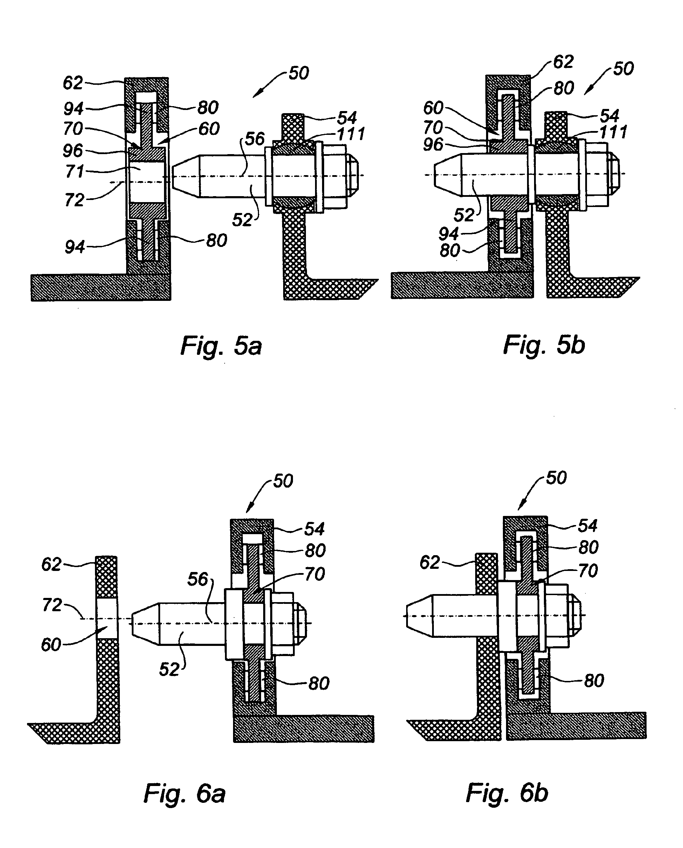

Les figures 5a et 5b représentent un troisième mode de réalisation du dispositif 50 de l'invention. Plus particulièrement, la figure 5a illustre une configuration dans laquelle le pion de centrage 52 n'est pas inséré dans l'alésage récepteur 60. La figure 5b illustre une configuration dans laquelle le pion de centrage 52 est inséré dans l'alésage récepteur 60.

Selon cette autre variante, le pion de centrage 52 est monté sur une rotule 111 fixée dans le support de pion 54. Dans cette configuration, la rotule est de conception standard, la limitation en débattement angulaire du pion étant reprise par les pièces mécaniques environnantes.

Les figures 6a et 6b représentent encore un autre mode de réalisation du dispositif 50 de l'invention. Plus particulièrement, la figure 6a illustre une configuration dans laquelle le pion de centrage 52 n'est pas inséré dans l'alésage récepteur 60. La figure 6b illustre une configuration dans laquelle le pion de centrage 52 est inséré dans l'alésage récepteur 60.

Selon cette variante, le système d'interface 70 est monté sur le support de pion 54 mobile en translation suivant un axe sensiblement perpendiculaire à l'axe central 56 dudit pion. Dans ce cas, le pion de centrage 52 est libre en positionnement contrairement à l'alésage récepteur 60 qui est fixe par rapport audit pion 52. Ainsi, il est plus aisé de réaliser le centrage par rapport à une pièce fixe. L'alimentation du système de commande des moyens de verrouillage 80 est, par exemple, portée par le côté comportant le pion de centrage 52.

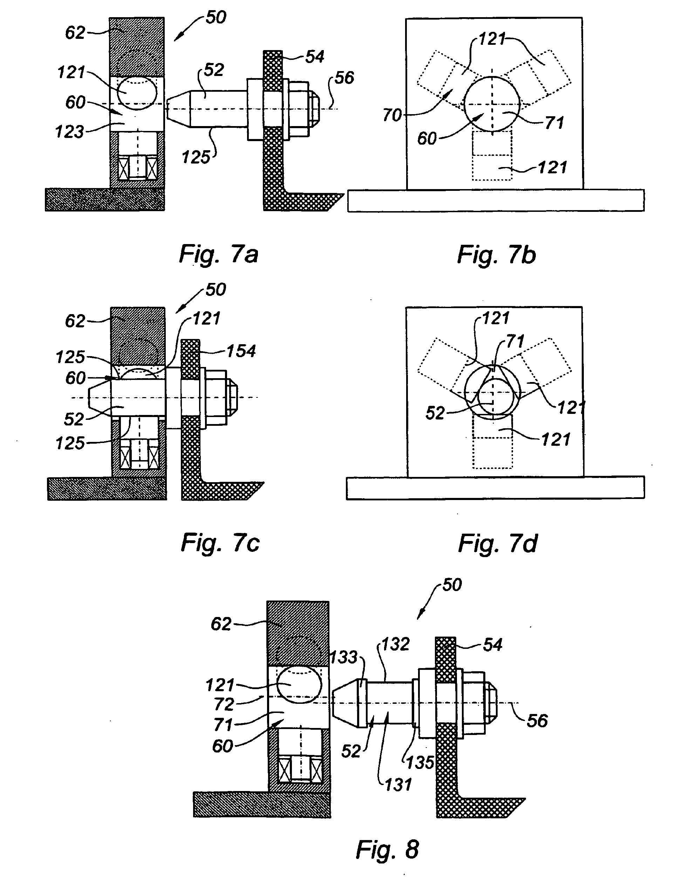

Selon un mode de réalisation représenté aux figures 7a à 7d, le système d'interface 70 comporte une multitude de plots de verrouillage 121 montés mobiles dans le support d'alésage 62.

Les figures 7a et 7b illustrent une configuration dans laquelle le pion de centrage 52 n'est pas inséré dans l'alésage récepteur 60. Les figures 7c et 7d illustrent une configuration dans laquelle le pion de centrage 52 est inséré dans l'alésage récepteur 60.

Le mode de réalisation ainsi représenté illustre l'emploi de trois plots de verrouillage 121 mais l'homme du métier peut adapter le nombre des plots de verrouillage en fonction du besoin.

Les plots de verrouillage 121 permettent de manière avantageuse à la fois de déterminer le diamètre de l'orifice central 71 par lequel le pion de centrage 52 s'insère dans l'alésage récepteur et également d'assurer le verrouillage du pion de centrage 52 une fois inséré dans l'alésage récepteur 60.

Les plots de verrouillage 121 sont commandés électriquement. Les plots de verrouillage 121 peuvent également être commandés de manière indépendante les uns des autres.

L'alésage récepteur 60 présente un orifice de diamètre supérieur au diamètre du pion de centrage 52 pour ne pas interférer avec le fonctionnement des plots de verrouillage 121.

Lorsque le pion de centrage 52 s'insère dans l'alésage récepteur 60, les plots de centrage 121 sont en position haute, à savoir non en contact avec le pion de centrage 52 (voir figures 7a et 7b). Pour ce faire, les plots de verrouillage 121 sont alimentés électriquement, dans le cas avantageux et préféré où l'on utilise un système de verrouillage à manque de courant.

Lorsque le pion de centrage 52 est inséré dans l'alésage récepteur 60, les plots de verrouillage viennent au contact de la partie latérale 125 du pion de centrage 52 (voir un exemple de positionnement en figures 7c et 7d). Dans cette position, les plots de verrouillage 121 sont bloqués, notamment par absence d'alimentation électrique, afin de maintenir le pion de centrage 52 dans l'alésage récepteur 60 sans créer de contrainte dans la structure médiane 5 et la structure d'entrée d'air 4.

Selon une autre variante représentée à la figure 8, le système d'interface est similaire à celui du mode de réalisation des figures 7a à 7d. Le pion de centrage 52 présente un décrochement 132 sur partie centrale 131. La partie centrale 131 présente alors une première section 133 et une deuxième section 135 entourant le décrochement 132 de diamètre inférieur à ceux de la première section 133 et de la deuxième section 135.

Un tel décrochement 132 permet d'associer à la fonction de centrage une fonction de blocage dans la direction de manoeuvre d'engagement des éléments l'un dans l'autre. En effet, il est possible que la longueur axiale du décrochement 132 soit sensiblement égale à celle des plots de verrouillage 121 de sorte que ces derniers soient en contact au moins partiellement avec les première et deuxième sections 133 et 135.

Tous les modes de réalisation représentés dans les différentes figures peuvent être employés seuls ou en combinaison.

La présente invention n'est nullement limitée au cas particulier décrit ci-dessus, dans lequel le dispositif de centrage est interposé entre une lèvre d'entrée d'air 4a mobile et le panneau interne 41 associé.

La présente invention couvre plus généralement tous les cas où le dispositif de centrage sus-décrit est interposé entre une structure mobile et une structure fixe de nacelle de moteur d'aéronef.

## Revendications

1. Dispositif de centrage (50) d'une structure mobile (4) sur une structure fixe (5) d'une nacelle (1) comportant :
- un pion de centrage (52) monté sur un support de pion (54) destiné à être fixé respectivement sur la structure mobile (4) ou sur la structure fixe (5), le pion de centrage (52) présentant un axe central (56), et
- un alésage récepteur (60) monté sur un support d'alésage (62) destiné à être fixé respectivement sur la structure fixe (5) ou sur la structure mobile (4), ledit alésage récepteur (60) étant apte à recevoir au moins le pion de centrage (52),
**caractérisé en ce que** le dispositif de centrage (50) comporte en outre un système d'interface (70) mobile apte à superposer l'axe central (56) du pion de centrage (52) et l'axe central (72) dudit système d'interface (70) ou de l'alésage récepteur (60) et à recevoir ledit pion (52) de centrage dans un orifice (71), ainsi que des moyens de verrouillage (80) aptes à bloquer ledit système d'interface (70).

2. Dispositif (50) selon la revendication précédente, **caractérisé en ce que** l'axe central (72) du système d'interface (70) et l'axe central (56) du pion de centrage (52) sont sensiblement parallèles et non confondus.

3. Dispositif (50) selon la revendication précédente, **caractérisé en ce que** le système d'interface (70) est un disque (90) dont l'orifice (71) est de diamètre sensiblement égal à celui du pion de centrage (52).

4. Dispositif (50) selon la revendication précédente, **caractérisé en ce que** le disque (90) comporte une partie périphérique (94) entourant une partie centrale (96), ladite partie périphérique (94) étant plus mince que la partie centrale (96).

5. Dispositif (50) selon l'une quelconque des revendications précédentes, **caractérisé en ce que** le système d'interface (70) est monté mobile en translation dans l'alésage récepteur (60) selon un axe sensiblement perpendiculaire à l'axe central (72) du système d'interface (70).

6. Dispositif (50) selon l'une quelconque des revendications précédentes, **caractérisé en ce que** les moyens de verrouillage (80) comportent des patins de verrouillage (80) aptes à bloquer la partie périphérique (94).

7. Dispositif (50) selon la revendication précédente, **caractérisé en ce que** les patins de verrouillages (80) sont activés électriquement.

8. Dispositif (50) selon l'une quelconque des revendications précédentes, **caractérisé en ce que** le système d'interface (70) comporte une rotule (100) montée dans l'orifice central (71) du disque (90).

9. Dispositif (50) selon l'une quelconque des revendications précédentes, **caractérisé en ce que** le pion (52) est monté sur une rotule (111) fixée dans le support de pion (54).

10. Dispositif (50) selon l'une quelconque des revendications précédentes, **caractérisé en ce que** le système d'interface (70) est monté sur le support de pion (54) mobile en translation suivant un axe sensiblement perpendiculaire à l'axe central (56) dudit pion (52).

11. Dispositif (50) selon l'une quelconque des revendications précédentes, **caractérisé en ce que** le système d'interface (70) comporte une multitude de plots de verrouillage (121) montés mobiles dans le support d'alésage (60).

12. Dispositif (50) selon la revendication précédente, **caractérisé en ce que** le pion de centrage (52) présente une première section (133) et une deuxième section (135) entourant un décrochement (131) de diamètre inférieur à ceux de la première section (133) et de la deuxième section (135).

13. Dispositif selon l'une quelconque des revendications précédentes, dans lequel ladite structure mobile est une structure d'entrée d'air (4) et ladite structure fixe est une structure médiane de nacelle.

14. Nacelle (1) pour turbomoteur comprenant une structure d'entrée d'air (4) et une structure médiane (5), **caractérisé en ce que** la nacelle (1) comporte un dispositif de centrage (50) de la structure d'entrée d'air (4) sur la structure médiane (5) selon la revendication 13.

## Claims

1. A device (50) for centering a mobile structure (4) on a fixed structure (5) of a nacelle (1) including:
- a centering pin (52) mounted on a pin holder (54) to be attached respectively onto the mobile structure (4) or onto the fixed structure (5), the centering pin (52) having a central axis (56), and
- a receiving bore (60) mounted onto a bore holder (62) to be attached respectively onto the fixed structure (5) or onto the mobile structure (4), said receiving bore (60) being capable of receiving at least the centering pin (52),
**characterized in that** the centering device (50) also comprises a movable interface system (70), capable of overlapping the central axis (56) of the centering pin (52) and the central axis (72) of said interface system (70) or of the receiving bore (60) and capable of receiving said centering pin (52) in a central opening (71), and a locking means (80) capable of locking said interface system (70).

2. The device (50) according to the preceding claim, **characterized in that** the central axis (72) of the interface system (70) and the central axis (56) of the centering pin (52) are substantially parallel and not distinct from each other.

3. The device (50) according to the preceding claim, **characterized in that** the interface system (70) is a disc (90) whereof the central orifice (71) has a diameter substantially equal to that of the centering pin (52).

4. The device (50) according to the preceding claim, **characterized in that** the disc (90) includes a peripheral portion (94) surrounding a central portion (96), said peripheral portion (94) being thinner than the central portion (96).

5. The device (50) according to any one of the preceding claims, **characterized in that** the interface system (70) is mounted mobile in translation in the receiving bore (60) along an axis substantially perpendicular to the central axis (72) of the interface system (70).

6. The device (50) according to any one of the preceding claims, **characterized in that** the locking means (80) include locking pads (80) suitable for locking the peripheral portion (94).

7. The device (50) according to the preceding claim, **characterized in that** the locking pads (80) are activated electrically.

8. The device (50) according to any one of the preceding claims, **characterized in that** the interface system (70) includes a ball pivot (100) mounted in the central orifice (71) of the disc (90).

9. The device (50) according to any one of the preceding claims, **characterized in that** the pin (52) is mounted on a ball pivot (111) fastened in the pin holder (54).

10. The device (50) according to any one of the preceding claims, **characterized in that** the interface system (70) is mounted on the pin support (54) mobile in translation along an axis substantially perpendicular to the central axis (56) of said pin (52).

11. The device (50) according to any one of the preceding claims, **characterized in that** the interface system (70) includes a multitude of locking lugs (121) mounted mobile in the bore holder (60).

12. The device (50) according to the preceding claim, **characterized in that** the centering pin (52) has a first section (133) and a second section (135) surrounding a recess (131) having a diameter smaller than those of the first section (133) and the second section (135).

13. The device according to any one of the preceding claims, in which said mobile structure is an air inlet structure (4) and said fixed structure is a median nacelle structure.

14. A nacelle (1) for a turbojet engine comprising an air inlet structure (4) and a median structure (5), **characterized in that** the nacelle (1) includes a centering device (50) for centering the air inlet structure (4) on the median structure (5) according to claim 13.

## Patentansprüche

1. Zentriervorrichtung (50) einer bewegbaren Struktur (4) auf einer feststehenden Struktur (5) einer Gondel (1), die aufweist:
- einen Zentrierstift (52), der auf einer Stifthalterung (54) montiert ist, die dazu bestimmt ist, jeweils auf der bewegbaren Struktur (4) oder auf der feststehenden Struktur (5) befestigt zu sein, wobei der Zentrierstift (52) eine zentrale Achse (56) aufweist, und
- eine aufnehmende Bohrung (60), die auf einer Bohrungshalterung (62) montiert ist, die dazu bestimmt ist, jeweils auf der feststehenden Struktur (5) oder auf der bewegbaren Struktur (4) befestigt zu sein, wobei die aufnehmende Bohrung (60) imstande ist, mindestens den Zentrierstift (52) aufzunehmen,
**dadurch gekennzeichnet, dass** die Zentriervorrichtung (50) weiterhin ein bewegbares Schnittstellensystem (70) aufweist, das imstande ist, die zentrale Achse (56) des Zentrierstifts (52) und die zentrale Achse (72) des Schnittstellensystems (70) oder der aufnehmenden Bohrung (60) zu überlagern und den Zentrierstift (52) in einer Öffnung (71) aufzunehmen, sowie Verriegelungsmittel (80), die imstande sind, das Schnittstellensystem (70) zu blockieren.

2. Vorrichtung (50) nach vorangehendem Anspruch, **dadurch gekennzeichnet, dass** die zentrale Achse (72) des Schnittstellensystems (70) und die zentrale Achse (56) des Zentrierstifts (52) etwa parallel sind und nicht vereint.

3. Vorrichtung (50) nach vorangehendem Anspruch, **dadurch gekennzeichnet, dass** das Schnittstellensystem (70) eine Scheibe (90) ist, deren Öffnung (71) einen Durchmesser hat, der etwa dem Durchmesser des Zentrierstifts (52) entspricht.

4. Vorrichtung (50) nach vorangehendem Anspruch, **dadurch gekennzeichnet, dass** die Scheibe (90) einen peripheren Abschnitt (94) aufweist, der einen zentralen Abschnitt (96) umgibt, wobei der periphere Abschnitt (94) schlanker ist als der zentrale Abschnitt (96).

5. Vorrichtung (50) nach einem der vorangehenden Ansprüche, **dadurch gekennzeichnet, dass** das Schnittstellensystem (70) gemäß einer Achse etwa senkrecht zur zentralen Achse (72) des Schnittstellensystems (70) verschiebend bewegbar in der aufnehmenden Bohrung (60) montiert ist.

6. Vorrichtung (50) nach einem der vorangehenden Ansprüche, **dadurch gekennzeichnet, dass** die Verriegelungsmittel (80) Verriegelungsplättchen (80) aufweisen, die imstande sind, den peripheren Abschnitt (94) zu blockieren.

7. Vorrichtung (50) nach vorangehendem Anspruch, **dadurch gekennzeichnet, dass** die Verriegelungsplättchen (80) elektrisch aktiviert werden.

8. Vorrichtung (50) nach einem der vorangehenden Ansprüche, **dadurch gekennzeichnet, dass** das Schnittstellensystem (70) ein Kugelgelenk (100) aufweist, das in der zentralen Öffnung (71) der Scheibe (90) montiert ist.

9. Vorrichtung (50) nach einem der vorangehenden Ansprüche, **dadurch gekennzeichnet, dass** der Stift (52) auf einem Kugelgelenk (111) montiert ist, das in der Stifthalterung (54) befestigt ist.

10. Vorrichtung (50) nach einem der vorangehenden Ansprüche, **dadurch gekennzeichnet, dass** das Schnittstellensystem (70) gemäß einer Achse etwa senkrecht zur zentralen Achse (56) des Stifts (52) verschiebend bewegbar auf der Stifthalterung (54) montiert ist.

11. Vorrichtung (50) nach einem der vorangehenden Ansprüche, **dadurch gekennzeichnet, dass** das Schnittstellensystem (70) eine Vielzahl von Verriegelungsklötzchen (121) aufweist, die in der Bohrungshalterung (60) bewegbar montiert sind.

12. Vorrichtung (50) nach vorangehendem Anspruch, **dadurch gekennzeichnet, dass** der Zentrierstift (52) einen ersten Abschnitt (133) und einen zweiten Abschnitt (135) aufweist, die einen Absatz (131) mit einem Durchmesser umgeben, der kleiner ist als der Durchmesser des ersten Abschnitts (133) und des zweiten Abschnitts (135).

13. Vorrichtung nach einem der vorangehenden Ansprüche, wobei die bewegbare Struktur eine Lufteingangsstruktur (4) ist und die feststehende Struktur eine mittlere Struktur einer Gondel ist.

14. Gondel (1) für einen Turbomotor, die eine Lufteingangsstruktur (4) und eine mittlere Struktur (5) umfasst, **dadurch gekennzeichnet, dass** die Gondel (1) eine Zentriervorrichtung (50) der Lufteingangsstruktur (4) auf der mittleren Struktur (5) nach Anspruch 13 aufweist.
